# EUROPÄISCHE PATENTANMELDUNG

(11) **EP 1 447 123 A1**
(43) Veröffentlichungstag der Anmeldung: **18.08.2004**
(21) Anmeldenummer: 04002984.5
(22) Anmeldetag: 11.02.2004
(51) Int. Cl.: B01D 47/06, F28C 1/04

(54) **Vorrichtung zur Reinigung von Schadstoffe enthaltenden Verbrennungsgasen**

(30) Priorität: 12.02.2003 AT 2042003
(71) Anmelder: FOIDL, Leonhard, A-6263 Fügen (AT)
(72) Erfinder: FOIDL, Leonhard, A-6263 Fügen (AT)
(74) Vertreter: Hofinger, Stephan

(57) **Zusammenfassung**

Eine Vorrichtung zur Reinigung von Schadstoffe enthaltenden Gasen, insbesondere von Verbrennungsgasen aus Öfen od. dgl. weist in einem Gehäuse (1) mehrere im Strömungsraum der Gase übereinander liegende Waschzonen (4, 5, 6, 7) auf. Eine Einrichtung zur Führung von Waschflüssigkeit durch das Gehäuse (1) umfasst einen Flüssigkeitsverteiler pro Waschzone (4, 5, 6, 7), der durch eine flache Wanne (8, 15) gebildet ist. Der Boden (11, 12, 13, 14) der Wanne ist mit einer Vielzahl von Austrittsöffnungen (16) versehen, deren Begrenzung aus nach unten ausgebogenen Zacken (20) besteht.

## Beschreibung

Die Erfindung betrifft eine Vorrichtung zur Reinigung von Schadstoffe enthaltenden Verbrennungsgasen aus Öfen, Heizungsanlagen, Verbrennungsanlagen od. dgl., mit einem Gehäuse, das einen Gaseinlass, mehrere im Strömungsraum der Gase übereinander liegende Waschzonen und einen Gasauslass aufweist, und mit einer Einrichtung zur Führung von Waschflüssigkeit durch das Gehäuse, die einen oberen Flüssigkeitszulauf, einen Flüssigkeitsverteiler pro Waschzone, einen unteren Auslauf sowie vorzugsweise eine mit einer Pumpe versehene Rückführleitung zum Zulauf aufweist.

Eine Vorrichtung dieser Art ist beispielsweise aus der EP 90 655 bekannt. Die zu reinigenden Gase werden mehrfach umgelenkt von unten nach oben durch die Vorrichtung geführt, wobei sie in den einzelnen Waschzonen mit der Waschflüssigkeit in Berührung kommen, die aus mehreren Sprühköpfen ausgesprüht und durch Ablenkplatten feiner verteilt wird. Auf diese Weise wird versucht, die Agglomeration der feinen Flüssigkeitstropfen möglichst hintanzuhalten, die sich auf das Ausmaß der Reinigung der warmen Gase nachteilig auswirkt. Schadstoffe, die auf diese Weise zumindest teilweise ausgewaschen werden, sind beispielsweise umweltschädliche Gase wie SO₂, NOₓ und auch CO₂ sowie grobe Feststoffpartikel, wie Ruß, Staub od. dgl. Weiters wird durch den Wärmetausch ein Teil der enthaltenen Wärme rückgewonnen. Die in der EP 90 655 gezeigten Sprühköpfe versprühen das Wasser jeweils in kegeliger Form, wobei die Agglomeration der Strahlen bzw. Tropfen insbesondere im Überschneidungsbereich der Sprühkegel stattfindet. Um die Überschneidungsbereiche möglichst klein zu halten, sind die Sprühköpfe voneinander beabstandet und lassen Zwischenräume frei, in denen der Strömungswiderstand für die Gase geringer ist. Die Gase umströmen daher die Sprühkegel, und der Reinigungsgrad ist gering.

Die Erfindung hat es sich nun zur Aufgabe gestellt, eine Vorrichtung zu schaffen, mittels der durch eine gleichmäßige, dichte Ausfüllung des Strömungsraumes für die zu reinigenden Gase durch vertikal nach unten fallende Flüssigkeitsstrahlen bzw.-tropfen die Reinigungswirkung wesentlich verbessert wird.

Erfindungsgemäß wird dies dadurch erreicht, dass jeder Flüssigkeitsverteiler durch eine Wanne gebildet ist, deren Boden mit einer Vielzahl von Austrittsöffnungen versehen ist, deren Begrenzung aus nach unten ausgebogenen Zacken besteht. Auf diese Weise wird ein maximaler Kontakt zwischen den Gasen und der Flüssigkeit geschaffen, und die Agglomeration der Flüssigkeitsstrahlen zu einem wesentlichen Teil auch dadurch vermieden, dass die Freifallstrecke kurz gehalten wird.

Es ist bekannt, dass Kohlendioxid in Wasser bei tieferen Temperaturen besser in Lösung geht als bei höheren Temperaturen. So löst etwa 1 Teil Wasser bei 0°C 1,7, bei 10°C 1,2, bei 20°C 0,8 und bei 60°C nur mehr 0,27 Teile Kohlendioxid.

Vorzugsweise werden daher die Gase auf eine Temperatur von etwa 10°C gekühlt, da hier bereits ein guter Reinigungsgrad erzielt werden kann, wobei dies in einfacher Weise dadurch erreicht werden kann, dass die Kühlstrecke der heiß eintretenden Gase in ausreichender Länge gewählt wird, und die Ausgangstemperatur der Waschflüssigkeit nicht höher als 6°C bis 8°C liegt.

Die einzelnen Reinigungszonen liegen dadurch übereinander, und die Waschflüssigkeit wird mehrfach eingesetzt, da sie jeweils von oben nach unten durch die einzelnen Zonen rieselt. Werden beispielsweise 4 Zonen eingesetzt, und treten die Gase mit etwa 250°C in die unterste, erste Zone ein, so weisen sie in der zweiten Zone bereits eine Temperatur von etwa 40°C, in der dritten Zone von 20° bis 30°C und in der vierten, obersten Zone die für die CO2 -Lösung bereits sehr günstige Temperatur von 10° bis 12°C auf, wobei die Waschflüssigkeit mit etwa 6° bis 8°C in die oberste Zone eintritt. Ein Teil der durch die Wannen rieselnden Waschflüssigkeit verdampft in der untersten, ersten Zone dank der hohen Gastemperatur, und der Dampf befeuchtet mitströmende feste Partikel ausreichend, um deren Abscheidung zu erreichen. Auf diese Weise gelingt auch die Abscheidung von feinstem Staub.

Die Höhe der Wannen beträgt vorzugsweise etwa 5 cm, sodass für jede Zone ein regenartige Bedingungen sicherstellender statischer Flüssigkeitsdruck gegeben ist. Als Beregnungsöffnungen eignen sich beispielsweise reibeisenartige Perforationen des gesamten Wannenbodens.

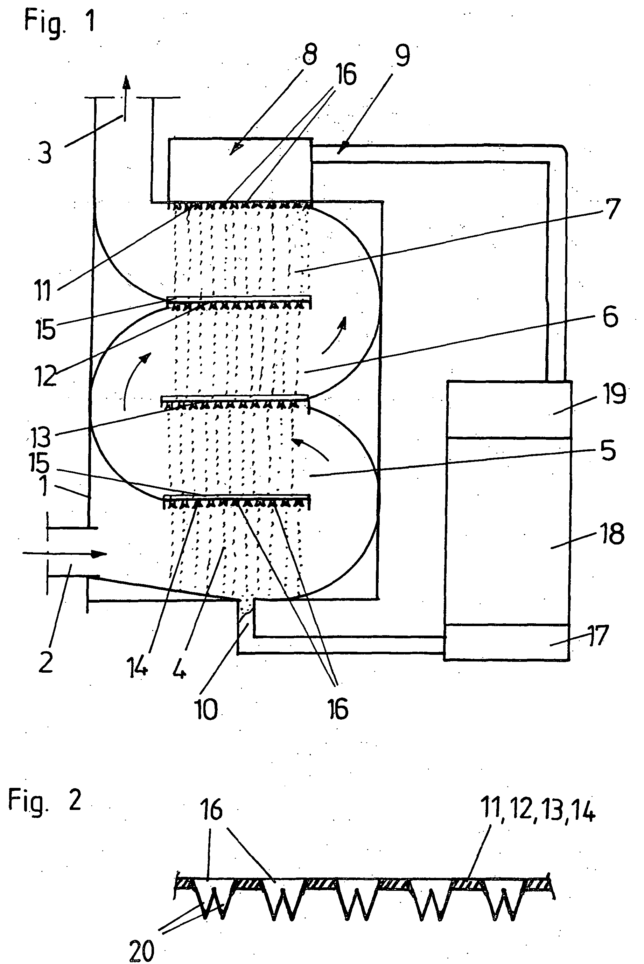

Nachstehend wird nun die Erfindung anhand der Figur der beiliegenden Zeichnung näher beschrieben. Die Fig. 1 zeigt einen schematischen Vertikalschnitt durch die Gasreinigungseinrichtung, und die Fig. 2 vergrößert einen Ausschnitt aus einer Bodenplatte eines Flüssigkeitsverteilers.

Ein aus Blech oder dergleichen. bestehendes Gehäuse 1 ist im unteren Bereich mit einem, beispielsweise mit einem Kaminanschluss eines häuslichen Ofens od. dgl. verbindbaren Einlass 2 und im oberen Bereich mit einem Auslass 3 versehen. Der Strömungsweg für die Gase verläuft mehrfach parallel umgelenkt durch horizontale Zonen 4,5,6,7 zwischen dem Einlass 2 und dem Auslass 3. Die Unterteilung des Gehäuses 1 in die horizontalen Zonen 4, 5, 6, 7 wird dabei durch Flüssigkeitsverteiler erreicht, die jeweils als Wanne 15 ausgebildet sind. Am Gehäuseboden ist ein trichterförmiger Ablauf 10 für Waschflüssigkeit vorgesehen, die durch eine Bodenplatte 11 mit Austrittsöffnungen 16 aus einer oberen Wanne 8 austritt. Die Waschflüssigkeit beregnet die oberste Zone 7 und wird in der obersten flachen Wanne 15 aufgefangen, die ebenfalls eine Bodenplatte 12 mit Austrittsöffnungen 16 aufweist. Von dort durchregnet die Waschflüssigkeit die zweite Zone 6 und sammelt sich in der nächsten, gleichartig ausgebildeten Wanne 15, aus deren Bodenplatte 13 sie durch die dritte Zone 5 nach unten in die unterste Wanne 15 mit der Bodenplatte 14 fällt. Aus deren Austrittsöffnungen 16 fällt die Waschflüssigkeit durch die unterste, vierte Zone 4 und fließt durch den Ablauf 10. Mit Hilfe einer Pumpe 17 wird die Flüssigkeit durch die Leitung 9 wieder in den oberen Speicherbehälter 8 hochgefördert, wobei sie vorzugsweise einen Filter 19 durchströmt und in einer Kühleinrichtung 18 (Wärmetauscher) auf eine Temperatur von etwa 6° bis 8°C gekühlt wird.

Die Schadstoffe enthaltenden Gase treten mit einer Temperatur von etwa 250°C durch den Einlass 2 ein und durchströmen die Waschzonen 4, 5, 6, 7, wobei sie jeweils Wärme an die Waschflüssigkeit abgeben. Die Gastemperatur beträgt daher in der zweiten Zone 5 zwischen 40° und 60°C, in der dritten Zone 6 zwischen 20° und 30°C und in der vierten, obersten Zone 7 zwischen 10° und 12°C. Die Waschflüssigkeit löst daher in der obersten Zone 7 zuerst Kohlendioxid, und in den unteren Zonen 4, 5 und 6 werden auch noch Anteile von SO₂ und NOₓ sowie Feststoffpartikel ausgewaschen. Messungen haben ergeben, dass kaltes Wasser mindestens 40 % des CO₂ und 60-80 % des NOₓ aus Rauchgasen auswäscht. Die Anzahl und der Querschnitt der Waschzonen kann variieren. Vorzugsweise sind die Zonen auf das Dreifache der zu reinigenden Gasmenge ausgelegt.

Wie Fig. 2 zeigt, sind die Austrittsöffnungen 16 durch Stanzungen der Platten 11, 12, 13, 14 gebildet, wobei jeweils reibeisenartige Zacken 20 nach unten ausgebogen sind, die das Zusammenfließen der Waschflüssigkeit zu einem größeren Strahl verhindern, und daher den Beregnungseffekt sicherstellen. Der Lochquerschnitt liegt bei etwa 1 mm².

## Patentansprüche

1. Vorrichtung zur Reinigung von Schadstoffe enthaltenden Verbrennungsgasen aus Öfen, Heizungsanlagen, Verbrennungsanlagen od. dgl., mit einem Gehäuse (1), das einen Gaseinlass (2), mehrere im Strömungsraum der Gase übereinander liegende Waschzonen (4, 5, 6, 7) und einen Gasauslass (3) aufweist, und mit einer Einrichtung zur Führung von Waschflüssigkeit durch das Gehäuse (1), die einen oberen Flüssigkeitszulauf (9), einen Flüssigkeitsverteiler pro Waschzone (4, 5, 6, 7), einen unteren Auslauf (10) sowie vorzugsweise eine mit einer Pumpe (19) versehene Rückführleitung zum Zulauf (9) aufweist, **dadurch gekennzeichnet, dass** jeder Flüssigkeitsverteiler durch eine Wanne (8, 15) gebildet ist, deren Boden (11, 12, 13, 14) mit einer Vielzahl von Austrittsöffnungen (16) versehen ist, deren Begrenzung aus nach unten ausgebogenen Zacken (20) besteht.

2. Vorrichtung nach Anspruch 1, **dadurch gekennzeichnet, dass** jede Austrittsöffnung (16) quadratisch ist und vier, durch Stanzung in den beiden Diagonalen nach unten gebogene Zacken (20) aufweist.
